# EUROPEAN PATENT APPLICATION

(11) **EP 4 280 050 A1**
(43) Date of publication of application: **22.11.2023**
(21) Application number: 22803641.4
(22) Date of filing: 28.03.2022
(51) Int. Cl.: G06F 8/38

(54) **WIDGET GENERATING METHOD AND APPARATUS, ELECTRONIC DEVICE, AND STORAGE MEDIUM**

(30) Priority: 21.05.2021 CN 202110560394
(71) Applicant: ZTE Corporation, Shenzhen, Guangdong 518057 (CN)
(72) Inventor: ZHOU, Huihong, Shenzhen, Guangdong 518057 (CN)
(74) Representative: Gevers Patents
(86) International application number: PCT/CN2022/083503
(87) International publication number: WO 2022/242315

(57) **Abstract**

The embodiments of the present application relate to the technical field of communications, and particularly relate to a widget generating method and apparatus, an electronic device, and a storage medium. In the present application, if a widget generating operation is identified, then, on the basis of the widget generating operation, acquiring user-specified data; on the basis of the user-specified data, determining a retrieval keyword; on the basis of the retrieval keyword, finding a widget template matching the data; and, on the basis of the matching widget template and the data, generating a widget.

## Description

### CROSS-REFERENCE TO RELATED APPLICATION(S)

This application is based on the Chinese Patent Application with the application No. 202110560394.6, filed on May 21, 2021, and claims a priority to the Chinese Patent Application, the entire contents of the Chinese Patent Application are incorporated herein by reference.

### TECHNICAL FIELD

Embodiments of the present disclosure relate to the field of computer technologies, and in particular, to a widget generating method and apparatus, an electronic device, and a storage medium.

### BACKGROUND

A widget is a lightweight user interface space, which can display different personalized information for a user, so as to enable the user to acquire information conveniently and quickly. A user can browse an alarm clock, weather, and other information through a widget. There is a corresponding relationship between a widget and an application. An application developer embeds codes of a widget into internal codes of an application to generate the widget upon developing an application. Therefore, the generated widget can share data and interconnect content with an application corresponding to the widget. When a user needs to use the widget, the user can find the widget in a system widget library and add the widget to the desktop.

However, when an application is released, a number of widgets are already fixed, and a displayed content of a widget is pre-developed and set by the application developer.

### SUMMARY

Embodiments of the present disclosure provide a widget generating method, including: acquiring user-specified data according to a widget generating operation in response that the widget generating operation is recognized; determining a retrieval keyword according to the user-specified data; searching for a widget template matching the data according to the retrieval keyword; and generating a widget according to the widget template that is matched and the data.

The embodiments of the present disclosure further provide a widget generating apparatus, including: a recognizing module, configured to acquire user-specified data according to a widget generating operation in response that the widget generating operation is recognized; a retrieval module, configured to determine a retrieval keyword according to the user-specified data and search for a widget template matching the data according to the retrieval keyword; and a generating module, configured to generate a widget according to the widget template that is matched and the data.

The embodiments of the present disclosure further provide an electronic device, including: at least one processor; and a memory communicatively connected with the at least one processor; where the memory stores instructions executable by the at least one processor, and the instructions are executed by the at least one processor, so as to enable the at least one processor to execute the widget generating method as described in the claims above.

### BRIEF DESCRIPTION OF THE DRAWINGS

FIG. 1 is a flowchart of a widget generating method in accordance with an embodiment of the present disclosure;
FIG. 2 is a schematic diagram of a template of a notifying widget in accordance with an embodiment of the present disclosure;
FIG. 3 is a schematic diagram showing an effect of a notifying widget in accordance with an embodiment of the present disclosure;
FIG. 4 is a schematic diagram of a template of a schedule widget in accordance with an embodiment of the present disclosure;
FIG. 5 is a schematic diagram showing an effect of a schedule widget in accordance with an embodiment of the present disclosure;
FIG. 6 is a schematic diagram of a widget generating apparatus in accordance with an embodiment of the present disclosure; and
FIG. 7 is a structural schematic diagram of an electronic device in accordance with an embodiment of the present disclosure.

### DETAILED DESCRIPTION

In order to make the purposes, technical solutions and advantages of the embodiments of the present disclosure clearer, the embodiments of the present disclosure will be described in detail below with reference to the accompanying drawings. However, those of ordinary skill in the art can understand that in each embodiment of the present disclosure, many technical details are provided for readers to better understand the present disclosure. However, even without these technical details and various changes and modifications based on the following embodiments, the technical solutions claimed in the present disclosure can also be realized. The division of the following embodiments is for the convenience of description, and should not constitute any limitation to the specific implementation of the present disclosure, and the embodiments can be combined and referred to each other without contradiction.

The main purpose of the embodiments of the present disclosure is to propose a widget generating method, so that a displayed content of a widget is no longer limited to prefabrication by an application developer, and a user can make a widget according to his/her display requirement for a data content.

The embodiments of the present disclosure relate to a widget generating method, which is applied to an electronic device, and the electronic device may include a mobile phone, a tablet computer, etc. In this embodiment and the following embodiments, the electronic device is described by taking a mobile phone as an example.

The widget generating method in this embodiment includes: acquiring user-specified data according to a widget generating operation in response that the widget generating operation is recognized; determining a retrieval keyword according to the user-specified data; searching for a widget template matching the data according to the retrieval keyword; generating a widget according to the widget template that is matched and the data.

The widget generating method provided by this embodiment recognizes a widget generating operation of a user, and generates a widget according to the operation of the user, thus there is no need for development and creation of a widget by an application developer, and further, the operation is simple and humanized, so that a user who does not master professional software development skills can also create a widget; moreover, the embodiments of the present disclosure generate a widget based on user-specified data, so that a widget is no longer limited to a displayed content of the widget prefabricated by an application developer, that is, the widget is no longer limited to a displayed content of an application program corresponding to the widget, and therefore, the generated widget may interconnect and display data with different application modules, resulting in the displayed content of the widget more suitable for user requirements. In addition, the widget template is retrieved according to the user-specified data, and thus, the retrieved widget template is more matched with the user-specified data content, and user requirements can be better satisfied by the generated widget.

The implementation details of the widget generating method in this implementation will be described in detail below. The following content is only implementation details provided for the convenience of understanding and is not necessary for implementing the present solution.

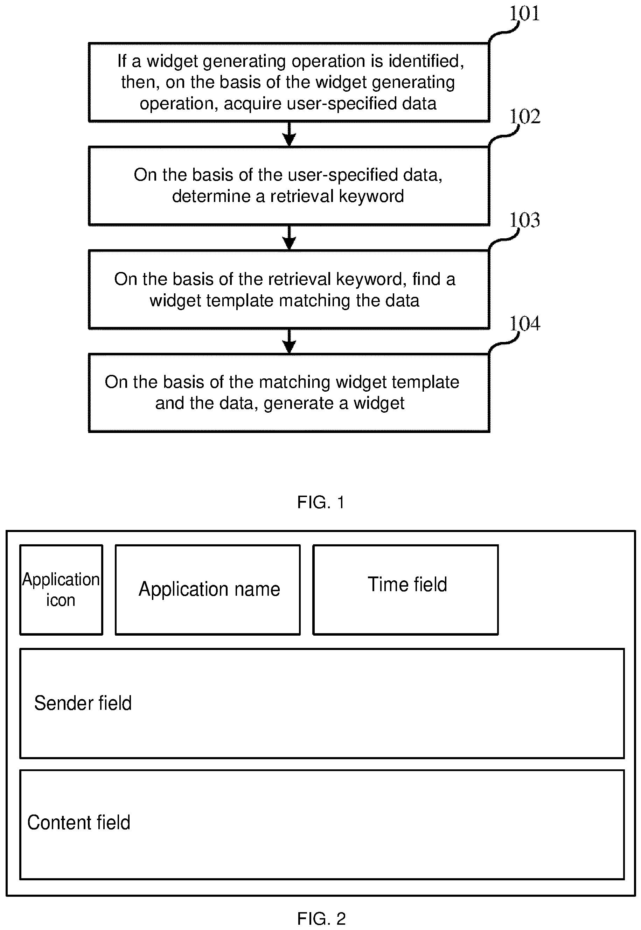

As shown in FIG. 1, step 101: user-specified data is acquired according to a widget generating operation in response that the widget generating operation is recognized. A user can trigger the widget generating operation through an action, which is easy to operate, and thus, customer experience can be improved.

A user operates an electronic device, for example, through a gesture operation, etc. The gesture operation includes but is not limited to a long press, a double click, etc. The widget generating operation can be pre-set for a user or set by a developer, which is not limited in this embodiment.

Taking the operation of the user as a gesture operation and the widget generating operation as a long press as an example, the electronic device acquires the operation of the user, and in response that the gesture operation is recognized as a long press and the pre-definition of the long press is a widget generating operation, then the data of the long press of the user is the user-specified data.

In some embodiments, the user-specified data may be email data, notepad data, schedule data, notification data, etc., but is not limited thereto, for example, a user can specify data of various social applications, learning applications, and entertainment applications, etc. The above data sources are modules in the device such as a mail, a notepad, a schedule, and a notification, respectively. The data sources specified in this embodiment are diversified, and data can be acquired from different modules. Compared with data sharing limited to the corresponding application itself, this embodiment can realize cross-module data sharing and content interconnectivity of an electronic device.

Step 102: a retrieval keyword is determined according to the user-specified data.

In some embodiments, a field content of each pre-set extraction field is extracted from the data; one of the extraction fields is selected as a retrieval key field; and a field content of the extracted retrieval key field is used as a retrieval keyword; the retrieval keyword is determined according to the respective field content. In this embodiment, the retrieval keyword is determined according to the field content of the data, so as to enable the retrieval widget template to meet the displayed requirements of the data better.

In this embodiment, each pre-set extraction field may include: a data source, an application name, notification receiving time, an activity name, a notification content, etc. Based on different user-specified data, the each pre-set extraction field may also change. This embodiment does not specifically limit a type of a pre-set extraction field.

Taking the user-specified data as a notification data as an example, the manner of determining a retrieval keyword according to the user-specified data will be described.

If the widget generating operation set by a user is a long press operation, when the user long presses, the electronic device recognizes an area that the user long presses, and reads the user-specified data based on an area that the user long presses. Referring to Table 1, if pre-set types of extraction fields include a data source field, an application name field, a sender field, a receiving time field, and a notification detail field, and the user-specified data includes: 9 minutes ago, when the sender Damai Jun sends a notification of the social application, the notification detail is "content xxx" and other information, then a field content corresponding to the data source is "notification", a field content corresponding to the application name is "social application", and a field content corresponding to the sender "sender xxx", a field content corresponding to the receiving time "9 minutes ago", and a field content corresponding to the notification detail "content xxx" are extracted. The electronic device can randomly select an extraction field as the retrieval key field, or set an extraction field as the retrieval key field by the user, so that the field content of the retrieval key field extracted from the user-specified data is regarded as the retrieval keyword, which is not limited in this embodiment.

**Table 1**

| Extraction field | Field content |
|---|---|
| Data source | Notification |
| Application name | Social application |
| Receiving time | 9 minutes ago |
| Sender | Sender XX |
| Notification detail | Content XXX |

After the retrieval keyword is determined, step 103 is executed.

Step 103: a widget template matching the data is searched for according to the retrieval keyword.

In some embodiments, there may be multiple types of widget templates, including but not limited to a notification widget template, a schedule widget template, a notepad widget template, etc. Different template fields may be correspondingly set in different widget templates. For example, referring to FIG. 2, the notification widget template includes: an application icon, an application name, a time field, a sender field, and other template fields. During the process of actual application, an interface style and a template field of the widget template can be set according to requirements, which are not limited in this embodiment.

In an example, the widget template can also be set with a corresponding label and search for a template matching the data according to the retrieval keyword and the label of the widget template. For example, the label of the widget template is "notification", and the retrieval keyword is also "notification", so the widget template is a matched widget template.

In an example, if multiple widget templates are found according to the retrieval keyword, the user may select one template from the found templates.

In another example, the widget template can be set with a template priority, and the retrieval keyword is matched with a label of the widget template with a higher priority first. If the match is successful, the retrieval is not continued, and the unique matched widget template is determined, and if the match is not successful, matching with the widget template of the next priority will be performed.

The above-mentioned retrieval keywords may be pre-set or randomly selected. In other embodiments, an extraction field is selected as the retrieval key field according to the pre-set priority of the respective extraction field.

In this embodiment, the retrieval key field is determined according to the priority, and the widget template is determined according to the retrieval key field with a higher priority, which is more beneficial to retrieve a widget template matching the user-specified data. Therefore, it is beneficial to retrieve a suitable widget template based on the retrieval keyword corresponding to the retrieval field according to the pre-set priority.

It is worth mentioning that if no matched widget template is found according to the currently selected retrieval keyword, the retrieval keyword can be re-selected. In this embodiment, a field content corresponding to the retrieval key field with the next priority may be selected as the retrieval keyword. That is, if the retrieval keyword can't be retrieved according to a field content with the highest priority, the retrieval keyword can be retrieved according to a field content with the second highest priority, so as to avoid the situation that the widget template cannot be retrieved according to the currently determined retrieval keyword.

For example, if the data source is an extraction field with the first priority, then the pre-set priority corresponding to the field content "notification" is the first priority, and "notification" is determined as the retrieval keyword. If the widget template is not retrieved according to "notification", the second-priority extraction field is used. If the application name is the second-priority extraction field, the pre-set priority corresponding to the field content "social application" is the second priority, and "social application" is determined as the retrieval keyword. If no widget template is retrieved according to the "social application", a field content corresponding to the extraction field with the third highest priority is selected as the retrieval keyword, and so on until a matched widget template is found.

After the matched widget template is found, step 104 is executed.

Step 104: a widget is generated according to the widget template that is matched and the data.

In some embodiments, a widget is generated according to the widget template and the field content. In this embodiment, the widget is generated according to the field content, instead of all the contents of the user-specified data, so that the displayed information of the generated widget is more targeted and can better meet customer requirements.

In some embodiments, an extraction field matching the template field in the widget template is searched for in the respective extraction field; the displayed content of the template field is acquired according to the field content corresponding to the matched extraction field content in response that a matched extraction field is searched; the template field of the widget template is deleted to acquire an updated widget template in response that no matched extraction field is found; a widget is generated according to the updated widget template and the displayed content of the template field. When there is no corresponding field content in the matched extraction field, the template field may also be deleted in the widget template.

Exemplarily, as shown in Table 2, in the notification data, the respective template field of the notification widget template includes: an application name, a time field, a sender field, a content field, and an electronic device searches for the extracted field matching the template field in respective extraction field, such as data source, an application name, a sender, and notification detail. For example, the application name in the template field matches the application name in the extracted field, and the time field in the template field matches the receiving time in the extracted field, and so on, so as to acquire a content mapping relationship between the template field and the extraction field in the widget template, as shown in Table 2.

**Table 2**

| Extraction field | Template field |
|---|---|
| Application name | Application name |
| Receiving time | Time field |
| Sender | Sender field |
| Notification detail | Content field |

If a matched extraction field is found, for example, the time field in the content mapping relationship has a matched receiving time, then the field content "9 minutes ago" corresponding to the receiving time is the displayed content.

If no matched extraction field is found, the template field is deleted from the widget template to acquire an updated widget template. After the template field is deleted, a displayed position of the template field in the widget template is vacated, and the electronic device can adaptively adjust the interface to make the interface beautiful.

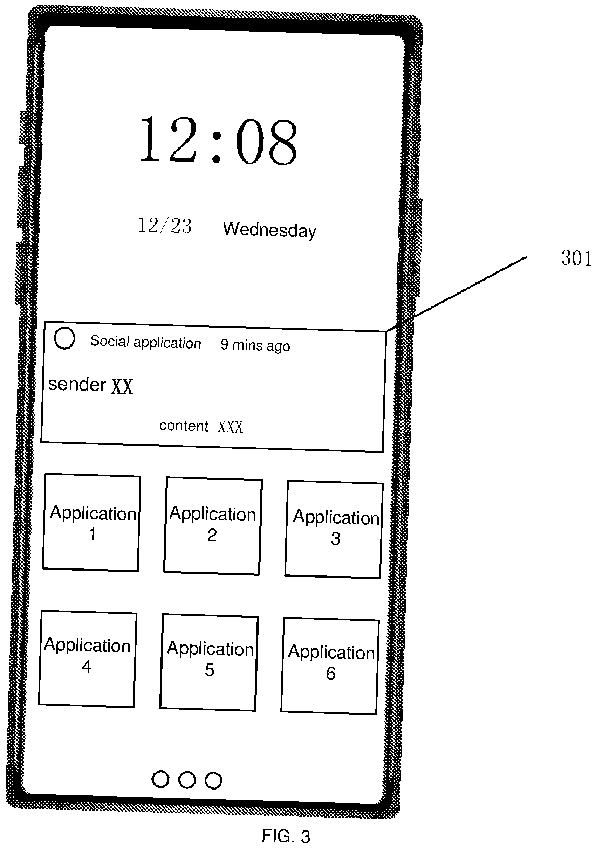

Referring to FIG. 3, when each template field in the widget template acquires displayed content or is deleted, a widget 301 is generated.

It is worth mentioning that in the example of the notification template above, the displayed content is the same as the field content, and when the displayed content is acquired, the field content can also be intelligently organized to make the displayed content more in accordance with the user's reading habits. For example, the displayed content is determined according to a pre-set displayed format and the field content.

For example, in terms of time display, intelligent judgment can be made in combination with time of an electronic device. For example, when a time plan of a certain schedule is all on the same day, and the time is displayed on the schedule widget, the date display is removed and the time display is retained.

Taking a schedule widget as an example below, if the widget generating operation is recognized, and data specified in the widget generating operation is schedule data, a field content in the schedule data is extracted by an extracting field, where the extracted field content is shown in Table 3.

**Table 3**

| Extraction field | Field content |
|---|---|
| Application name | Schedule |
| Activity name | XX activity |
| Start time | 8:00, April 1, 2021 |
| End time | 9:00, April 1, 2021 |
| Schedule type | Schedule |

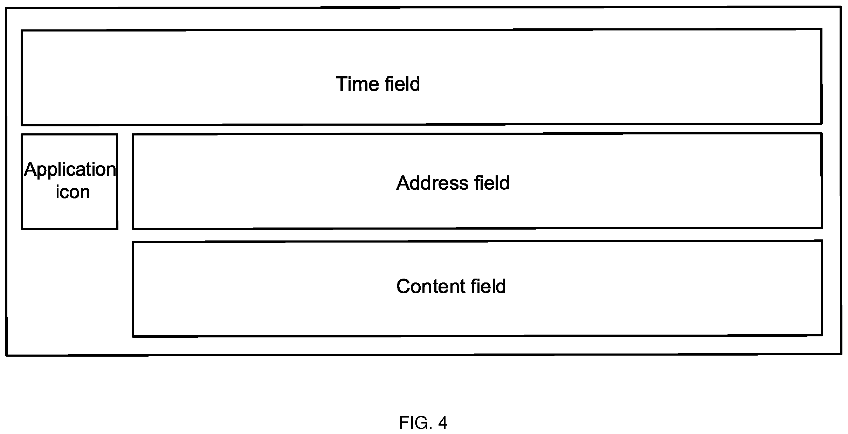

The retrieval keyword is determined according to the above-mentioned extracted field content, and the matched widget template is acquired according to the retrieval keyword. The matched widget template is shown in FIG. 4. Then, an extracted field matching the template field in the widget template is searched for in each extracted field, to acquire the mapping relationship shown in Table 4.

**Table 4**

| Extraction field | Template field |
|---|---|
| Application name | Null |
| Activity name | Content field |
| Start time | Time field |
| End time | Time field |
| Schedule type | Null |
| Null | Address field |

In the mapping relationship, if the extraction field is Null and the template field is not Null, it indicates that no matched extraction field is found. Therefore, the template field is deleted in the widget template. For example, in the address field shown in Table 4, if no matched extraction field is found, the address field is deleted in the widget template; if neither the extraction field nor the template field is Null in the mapping relationship, it indicates that a matched extraction field has been found, and the field content of the extraction field will be intelligently organized. For example, the displayed content of the template field can be obtained by pre-setting an algorithm for adaptively displaying the field content, or pre-setting the displayed format of the field content by the developer.

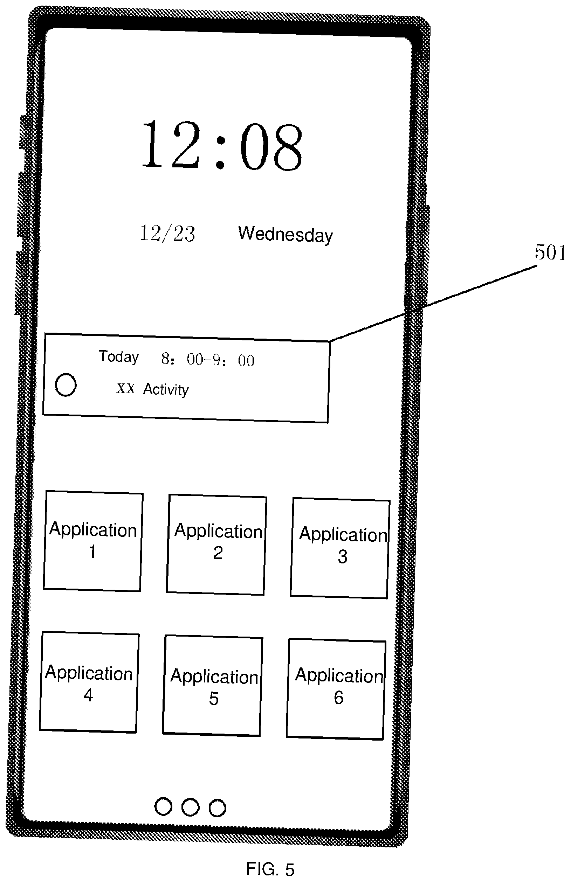

Exemplarily, the start time of the above schedule is 8:00 on April 1, 2021, the end time of the above schedule is 9:00 on April 1, 2021, and the year, day, and month information of the start time and the end time are the same, and the year, month, and day will be displayed on the electronic device itself, so the displayed content of the display device can be adaptively adjusted based on the time of the electronic device. The displayed content can be "8:00-9:00 today", and a widget generated according to the schedule widget template and the field content is shown in FIG. 5.

In this embodiment, there is no need for a one-to-one correspondence between an extracted field and a template field. If a template field is defined in a widget template, but no matched field content can be found, the displayed content of the template field can be reduced and the widget template is adaptively adjusted. When the field content is more than the content of the template field, the extra field content is discarded, and the electronic device can adaptively display according to the content of the widget template, which is more suitable for user habits.

In some embodiments, after the widget is generated according to the widget template and the data, the displayed position specified by the user is recognized according to an operation of a user, and the widget is displayed at the displayed position. For example, the generated widget is placed in a space where the user stays through gestures, including but not limited to the desktop.

In this embodiment, the user does not need to find and add a widget in a system widget library. The user directly specifies a displayed position, and a widget can be displayed when they are not displayed. The operation is simple and humanized, and it is more friendly to people who are not familiar with electronic devices.

In some embodiments, the data synchronization mode includes a fixed data display and a dynamic data display. A user can set the data synchronization mode before the widget is generated, and can also set the data synchronization mode after the widget is generated. The set data synchronization mode can be for all widgets generated on the electronic device, or for a widget on the electronic device. In this embodiment, a user can choose a dynamic data display or a fixed data display according to his/her requirements. In this way, a user can customize whether the displayed content in the widget is updated, so that the displayed content of the widget is further adapted to the actual requirements of a user.

In some embodiments, if the data synchronization mode input by the user is a dynamic data display, then after the data is updated, the displayed content of the widget is updated according to the updated data.

When the data synchronization mode input by the user is a dynamic data display, the mapping relationship between the extraction field and the template field will be adjusted to an association of the data relationship. When the field content is updated, the widget acquires the field content through the mapping relationship, gets the updated content field, and displays the latest field, that is, the displayed content of the widget is updated according to the updated data. For example, the displayed content of the widget is as shown in 301. When the notification detail has been changed and a sender sends a new message, such as "OK, thank you", the widget confirms that the content field is changed through the mapping relationship, and extracts the field content of the notification detail, i.e., "OK, thank you", and displays it where the field content is displayed. For another example, when the current widget is schedule data, the data synchronization mode selected by the user is a dynamic data display, and further, when the user-specified schedule data is updated, the end time of the schedule data will be changed from 9:00 on April 1, 2021, to 10:00 April 1, 2021, the currently displayed data of the widget will also be updated.

When the data synchronization mode input by the user is a fixed data display, the mapping relationship between the extraction field and the template field will be adjusted to the content level. When the mapping relationship is at the content level, the widget will not be updated after the field content changes, and further, the displayed content of the widget will be fixed to meet the requirements of users to fix the displayed content of the widget. For example: the widget fixedly displays a notification message from a certain chat application, and the widget fixedly displays certain notepad data.

In the embodiments of the present disclosure, a user can create a widget through simple and humanized operations, and the established widget meets user requirements for data display. At the same time, a widget can also facilitate a user to operate an electronic device, thereby the operation friendliness and difficulty-of-use of an electronic device is improved. For example, for the elderly group, it is more convenient for the elderly to operate an electronic device.

The step division of the above various methods is only for the sake of clarity of description, and it can be combined into one step, or some steps can be split and decomposed into multiple steps. As long as these steps include the same logical relationship, these steps are all within the scope of protection of this patent. Adding insignificant modifications or introducing insignificant designs to the algorithm or processes, but not changing the core design of the algorithm and processes are all within the scope of protection of the present disclosure.

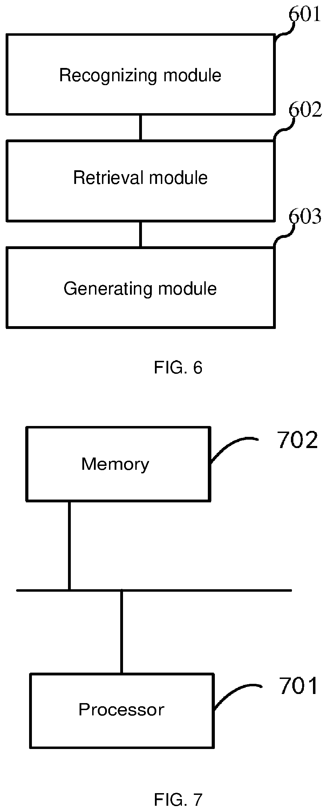

The embodiments of the present disclosure also provide a widget generating apparatus, as shown in FIG. 6, including: a recognizing module 601, configured to acquire user-specified data according to a widget generating operation in response that the widget generating operation is recognized; a retrieval module 602, configured to determine a retrieval keyword according to the user-specified data and search for a widget template matching the data according to the retrieval keyword; a generating module 603, configured to generate a widget according to the widget that is matched and the data.

In some embodiments, the retrieval module 602 is further used to extract a field content of each of pre-set extraction fields from the data; select one of the extraction fields as a retrieval key field; take an extraction field content of the retrieval key field as a retrieval key.

In some embodiments, the generating module 603 is further configured to generate the widget according to the widget template and the field content.

In some embodiments, the generating module 603 is further configured to search for an extraction field matching the template fields in the widget template among the extraction fields; acquire a displayed content of the template fields according to a field content corresponding to the extraction field that is matched in response that the extraction field that is matched is found; delete the template field in the widget template to acquire an updated widget template in response that the extraction field that is matched is not found; generate a widget according to the updated widget template and the displayed content of the template field.

In some embodiments, the retrieval module 602 is further configured to determine a retrieval keyword according to pre-set priorities corresponding to the content of each field.

In some embodiments, the generating module 603 further updates a displayed content of the widget according to the updated data after the data is updated, if a data synchronization mode input by the user is a dynamic data display, where the data synchronization mode includes a fixed data display and a dynamic data display.

In some embodiments, the widget generating module 603 is further configured to recognize a user-specified displayed position according to an operation by a user; and display the widget at the displayed position.

In some embodiments, the user-specified data in the recognizing module 601, may be email data, notepad data, notification data, schedule data, etc.

It is not difficult to find that this embodiment is a device embodiment corresponding to the above-mentioned embodiments, and this embodiment can be implemented in cooperation with the above-mentioned embodiments. The relevant technical details mentioned in this embodiment are still valid in this embodiment, and will not be repeated herein to reduce repetition. Accordingly, the relevant technical details mentioned in this embodiment can also be applied to the above embodiments.

It is worth mentioning that all the modules involved in this embodiment are logical modules. In practical applications, a logical unit can be implemented by a physical unit, a part of a physical unit, or a combination of multiple physical units. In addition, to highlight the innovative part of the present disclosure, units that are not closely related to solving the technical problem proposed in the present disclosure are not introduced in this embodiment, but this does not mean that there are no other units in this embodiment.

The embodiments of the present disclosure also provide an electronic device, as shown in FIG. 7, including: at least one processor 701; and a memory 702 communicatively connected to the at least one processor 701; where the memory 702 stores instructions executable by at least one processor 701, the instructions are executed by the at least one processor 701, so as to enable the at least one processor 701 to execute the widget generating method in the foregoing embodiments.

The memory and the processor are connected by a bus, and the bus may include any number of interconnected buses and bridges, and the bus connects various circuits of one or more processors and the memory. The bus may also connect various other circuits such as peripheral devices, voltage regulators, and power management circuits, all of which are well known in the art and therefore will not be further described herein. A bus interface provides an interface between a bus and a transceiver. A transceiver may be a single element or multiple elements, such as multiple receivers and transmitters, providing units for communicating with various other devices over a transmission medium. Data processed by the processor is transmitted on the wireless medium through the antenna, and further, the antenna also receives the data and transmits the data to the processor.

The processor is responsible for managing the bus and general processing, and can also provide various functions, including timing, peripheral interfacing, voltage regulation, power management, and other control functions. And, the memory can be used to store data that the processor uses when executing operations.

The embodiments of the present disclosure further provide a computer-readable storage medium. The above method embodiments are implemented when the computer program is executed by the processor.

That is, those skilled in the art can understand that all or part of the steps in the methods of the above embodiments can be completed by instructing related hardware through a program, the program is stored in a storage medium and includes several instructions to make a device (It may be a single-chip microcomputer, a chip, etc.) or a processor to execute all or part of the steps of the methods described in the various embodiments of the present disclosure. The storage medium includes various types of medium capable of storing program codes, such as a U disk, a mobile disk, a Read-Only Memory (ROM), a Random-Access Memory (RAM), a magnetic disk, or an optical disk.

Those of ordinary skill in the art can understand that the above-mentioned embodiments are specific embodiments for realizing the present disclosure, and in practical applications, various changes can be made to the above-mentioned embodiments in form and details without departing from the spirit and scope of the present disclosure.

## Claims

1. A widget generating method, comprising:
acquiring user-specified data according to a widget generating operation in response that the widget generating operation is recognized;
determining a retrieval keyword according to the user-specified data;
searching for a widget template matching the data according to the retrieval keyword;
generating a widget according to the widget template that is matched and the data.

2. The widget generating method according to claim 1, wherein the determining the retrieval keyword according to the user-specified data comprises:
extracting a field content of each of pre-set extraction fields from the data;
selecting one of the extraction fields as a retrieval key field;
taking an extracted field content of the retrieval key field as a retrieval keyword;
the generating the widget according to the widget template that is matched and the data comprises:
generating the widget according to the widget template and the field content.

3. The widget generating method according to claim 2, wherein the generating the widget according to the widget template and the field content comprises:
searching for an extraction field matching template fields in the widget template;
acquiring a displayed content of the template fields according to a field content corresponding to the extraction field that is matched in response that the extraction field that is matched is found;
deleting the template field in the widget template to acquire an updated widget template in response that the extraction field that is matched is not found;
generating the widget according to the updated widget template and the displayed content of the template fields.

4. The widget generating method according to claim 2, wherein the selecting one of the extraction fields as the retrieval key field comprises:
selecting one extraction field as the retrieval key field among the extraction fields according to pre-set priorities of the extraction fields.

5. The widget generating method according to any one of claims 1 to 4, wherein after the generating the widget according to the widget template that is matched and the data, further comprising:
updating a displayed content of the widget after the data is updated, in response that a data synchronization mode input by a user is a dynamic data display;
wherein the data synchronization mode comprises a fixed data display and a dynamic data display.

6. The widget generating method according to any one of claims 1 to 4, wherein after the generating the widget according to the widget template and the data, further comprising:
recognizing a user-specified displayed position according to an operation by a user;
displaying the widget at the displayed position.

7. The widget generating method according to any one of claims 1 to 6, wherein the user-specified data comprises any one or a combination of the following: mail data, notepad data, notification data, and schedule data.

8. A widget generating apparatus, comprising:
a recognizing module, configured to acquire user-specified data according to a widget generating operation in response that the widget generating operation is recognized;
a retrieval module, configured to determine a retrieval keyword according to the user-specified data, and search for a widget template matching the data according to the retrieval keyword;
a generating module, configured to generate a widget according to the widget template that is matched and the data.

9. An electronic device, comprising:
at least one processor; and,
a memory communicatively connected to the at least one processor; wherein,
the memory stores instructions executable by the at least one processor, and the instructions are executed by the at least one processor, so as to enable the at least one processor to execute the widget generating method according to any one of claims 1 to 7.

10. A computer-readable storage medium, having stored a computer program thereupon, wherein when the computer program is executed by a processor, the widget generating method according to any one of claims 1 to 7 is implemented.
